# EUROPÄISCHE PATENTSCHRIFT

(11) **EP 1 896 290 B1**
(45) Veröffentlichungstag und Bekanntmachung des Hinweises auf die Patenterteilung: **04.11.2009**
(21) Anmeldenummer: 06761644.1
(22) Anmeldetag: 30.05.2006
(51) Int. Cl.: B60N 2/44, B60N 2/66

(54) **TRÄGER MIT EINER LORDOSENVERSTELLEINRICHTUNG FÜR EINEN KRAFTFAHRZEUGSITZ**
SUPPORT WITH A BACKREST ADJUSTER DEVICE FOR A MOTOR VEHICLE SEAT
SUPPORT COMPRENANT UN SYSTEME DE REGLAGE LORDOSIQUE POUR SIEGE D'AUTOMOBILE

(30) Priorität: 30.05.2005 DE 202005008565 U; 30.05.2005 DE 102005025122
(43) Veröffentlichungstag der Anmeldung: 12.03.2008
(73) Patentinhaber: Brose Fahrzeugteile GmbH & Co. KG, Coburg, 96450 Coburg (DE)
(72) Erfinder: PRAUSE, Andreas, 96450 Coburg (DE); MACHT, Alwin, 96250 Ebensfeld (DE); FISCHER, Markus, 96274 Itzgrund (DE); BELOCH, Klaus, 96247 Michelau (DE); FLIEGER, Michael, 96231 Staffelstein (DE)
(74) Vertreter: Baumgärtel, Gunnar
(86) Internationale Anmeldenummer: PCT/DE2006/000920
(87) Internationale Veröffentlichungsnummer: WO 2006/128428

(56) Entgegenhaltungen:
- DE-U1- 20 100 018
- DE-U1- 20 313 925
- US-A- 6 056 360

## Beschreibung

Die Erfindung betrifft einen Träger mit einer Lordosenverstelleinrichtung für einen Kraftfahrzeugsitz nach dem Oberbegriff des Anspruchs 1.

Ein derartiger Träger ist dazu ausgebildet und vorgesehen in einer Einbauposition in einem Lehnengestell eines Kraftfahrzeugsitzes mit einer Lordosenstütze zum Abstützen des Rückens eines Sitzbenutzers angeordnet zu werden. Ein solches Lehnengestell weist eine dem Rücken des Sitzbenutzers zugewandte Vorderseite auf, entlang der sich die Wirbelsäule des Sitzbenutzers bei bestimmungsgemäßen Gebrauch des Sitzes in Lehnenlängsrichtung erstreckt. An der Vorderseite des Lehnengestells ist eine Lordosenstütze zum Abstützen des Rückens eines Sitzbenutzers angeordnet.

Der Träger trägt auf seiner Vorderseite eine Lordosenverstelleinrichtung, die in der Einbauposition zur Einstellung der Lage der Lordosenstütze senkrecht zur Erstreckungsebene des Lehnengestells dient, um die Wölbung eines Lehnenpolsters zu verstellen, das vor dem Lehnengestell und der Lordosenstütze angeordnet ist, über das sich der Rücken des Fahrzeuginsassen an der Lordosenstütze abstützt.

Eine solcher Träger für eine Lordosenverstelleinrichtung ist aus dem Gebrauchsmuster DE 203 13 925 bekannt. Danach umfasst die Lordosenverstelleinrichtung weiterhin ein mit der Lordosenstütze in Wirkverbindung stehendes Verstellelement und einen bezüglich des Verstellelementes durch Verschieben bewegbaren Gleiter, die über eine Rampe nach dem Keilprinzip derart zusammenwirken, dass bei einer Bewegung des Gleiters das Verstellelement mit einer Komponente senkrecht zur Bewegungsrichtung des Gleiters verstellt wird.

Um eine Lordoseverstellung durch Querbewegung des Gleiters zu erreichen, ist ein Verstellantrieb vorgesehen. Der Verstellantrieb weist eine Spindel auf, die sowohl mit einem Rechts- als auch einem Linksgewinde ausgestattet ist, um den Gleiter in zwei einander entgegengesetzte Richtungen verstellen zu können.

Ein weiterer Träger mit einer Lordosenverstelleinrichtung für einen Kraftfahrzeugsitz ist in der US-A-6056360 beschrieben.

Der Erfindung liegt das Problem zugrunde, einen Träger mit einer Lordosenverstelleinrichtung der eingangs genannten Art hinsichtlich des Lordosenverstellmechanismus zu verbessern, wobei insbesondere eine kostengünstigere Art der Verstellung der Lordosenstütze ermöglicht werden soll.

Das Problem wird erfindungsgemäß durch die Schaffung eines Trägers mit einer Lordosenverstelleinrichtung mit den Merkmalen des Anspruchs 1 gelöst.

Danach sind zwei Gleiter vorgesehen, die in entgegengesetzten Spannrichtungen vorgespannt sind. In diesem Fall sind zwei Verstellelemente vorgesehen, wobei die zwei Gleiter jeweils relativ zu mindestens einem der Verstellelemente bewegbar sind. Die Verwendung zweier Gleiter und zweier Verstellelemente bietet eine größere Einwirkmöglichkeit auf die Lordosenstütze. Gleichzeitig sind die zwei Gleiter durch eine über das Zugmittel auf die Gleiter übertragene Zugkraft in entgegengesetzte Zugrichtungen bewegbar. Damit deckt sich die Zugrichtung des ersten Gleiters mit der Spannrichtung des zweiten Gleiters und die Spannrichtung des ersten Gleiters mit der Zugrichtung des zweiten Gleiters.

Ein teurer Verstellantrieb mit einem Rechts- und gleichzeitig einem Linksgewinde, wie aus dem Stand der Technik bekannt, ist somit überflüssig: Zur Bewegung des Gleiters in Spannrichtung wirkt auf den Gleiter eine Spannkraft, zur Bewegung in Zugrichtung kann eine Zugkraft auf den Gleiter einwirken, wenn ein entsprechender Antrieb betätigt wird.

Durch die Vorspannung der Gleiter wird eine kostengünstige Verstellmöglichkeit bereit gestellt.

In einer bevorzugten Ausführungsform bewegen sich die Gleiter in Spannrichtung, wenn die über das Zugmittel auf die Gleiter übertragene Zugkraft dem Betrage nach kleiner ist als die Vorspannung der Gleiter. Umgekehrt bewegen sich die Gleiter in Zugrichtung, wenn die über das Zugmittel auf die Gleiter übertragene Zugkraft dem Betrage nach größer ist als die Vorspannung der Gleiter. Heben sich die Spannkraft der Vorspannung und die Zugkraft gegenseitig auf, bewegen sich die Gleiter nicht und es stellt sich eine Art Kräftegleichgewicht ein, das allein durch die Regelung der Zugkraft (also ein Erhöhen oder ein Erniedrigen derselben) aus dem Gleichgewicht gebracht werden kann und in einer Bewegung der Gleiter resultiert.

Bevorzugt weisen die Spannrichtungen und die Zugrichtungen der Gleiter in entgegengesetzte Richtungen. Damit ergibt sich aus der Vektoraddition der Spannrichtung und der Zugrichtung die resultierende Bewegungsrichtung des Gleiters: Entweder die Spannrichtung, die Zugrichtung oder der Stillstand.

Es ist bevorzugt vorgesehen, dass die zwei Gleiter über ein Spannelement miteinander gekoppelt sind. Das Spannelement (z. B. eine Feder) bewirkt dabei die Vorspannung der beiden Gleiter. Durch die Kopplung über das Spannelement wird die Vorspannung, die am ersten Gleiter anliegt, und die Vorspannung, die am zweiten Gleiter anliegt, dem Betrage nach miteinander gekoppelt. Wird als Spannelement eine homogene Feder verwendet, sind die beiden Vorspannungen dem Betrage nach gleich, weisen jedoch in unterschiedliche Richtungen.

In einer Ausführungsform erfolgt die Übertragung der Zugkraft über das Zugmittel auf die Gleiter durch eine Handverstellung, die z. B. ein Handrad aufweist. Durch die Handverstellung kann sowohl die Zugkraft erhöht werden, was eine Bewegung der Gleiter in Zugrichtung zur Folge hat, oder aber auch die Zugkraft verringert werden, was eine Bewegung der Gleiter in Spannrichtung bewirkt. Mittels der Handverstellung lässt sich die auf die Gleiter wirkende Zugkraft vorteilhaft über das Zugmittel regulieren.

Besonders bevorzugt ist eine Sperre vorgesehen, die in einer Sperrstellung verhindert, dass die Gleiter durch die Vorspannung der Gleiter in Spannrichtung bewegt werden. Durch die Sperre ist es nicht notwendig, eine Zugkraft zum Halten der Gleiter in einer festen Position aufzuwenden. Werden die Gleiter gerade nicht bewegt, wird ihre Bewegung in Sperrrichtung durch die Sperre gehemmt und verhindert. Dabei ist es nicht notwendig, in der Sperrstellung auch die Bewegung der Gleiter in Zugrichtung zu sperren, da eine Bewegung der Gleiter in Zugrichtung der Vorspannung entgegenwirkt. Mit gelöster Sperre und ohne über das Zugmittel auf die Gleiter eine Zugkraft zu übertragen, werden die Gleiter durch die Vorspannung in Spannrichtung bewegt.

In einer Ausführungsform wird die Vorspannung der Gleiters durch eine Feder und/oder ein elastisches Element bereitgestellt. Dies kann zum Beispiel eine Schraubenfeder oder ein Gummiband sein.

Als Zugmittel dient bevorzugt ein Seilzug, besonders bevorzugt ein Bowdenzug. Das Hüllrohr des Bowdenzuges stützt sich dabei an einem Stützelement ab, auf das auch ein Spannelement einwirkt, das die Vorspannung der Gleiter bewirkt. Somit wirken am Ort des Stützelements sowohl die Vorspannung der Gleiter als auch das Hüllrohr des Bowdenzuges, der als Mittel zur Übertragung der Zugkraft wirkt.

In dieser Ausführungsform und bei Verwendung von zwei gegenläufigen Gleitern dient bevorzugt einer der zwei Gleiter als Stützelement, auf das sich das Hüllrohr des Bowdenzuges abstützt. Die Sehne des Bowdenzuges ist dabei am anderen Gleiter befestigt, so dass durch die Relativbewegung der Sehne gegen das Hüllrohr die Zugkraft auf die beiden gegeneinander vorgespannten Gleiter übertragen wird.

Die Gleiter sind bevorzugt im Wesentlichen parallel zu der Erstreckungsebene des Lehnengestells bewegbar. Durch die Keilbewegung der Gleiter gegen das Verstellelement und die Bewegung des Verstellelements mit einer Komponente senkrecht zur Gleiterbewegung wird dabei die Lordosenstütze senkrecht zur Erstreckungsebene des Lehnengestells verstellt.

In einer Ausführungsform sind die Gleiter im Wesentlichen geradlinig bewegbar. Somit bleiben Vorspannungsrichtung und Zugrichtung während der Bewegung der Gleiter konstant und müssen nicht umgelenkt werden.

Die Bewegung der Gleiter ist in einer Ausführungsform mittels einer Gleiterführung (z.B. Führungsschiene) geführt, die an mindestens einem Ende durch einen Anschlag begrenzt ist. Dadurch wird ein Ausbrechen der Gleiter aus der für ihn vorgesehenen Bewegungsbahn verhindert.

Der erfindungsgemäße Träger wird nun anhand von in Figuren dargestellten Ausführungsbeispielen näher erläutert. Es zeigen:
- Figur 1: eine perspektivische Ansicht eines Trägers mit einer Lordosenverstelleinrichtung zur Einstellung der Lage einer Lordosenstütze für eine Rückenlehne eines Kraftfahrzeugsitzes;
- Figur 2: den Träger der Figur 1 in schematischer Darstellung;
- Figur 3: eine schematische Darstellung der Kopplung der Lordosenverstelleinrichtung des Trägers aus Figur 1 mit einer Handverstellung;
- Figur 4: eine Handverstellung für die Lordosenverstelleinrichtung der Figur 1 in schematischer Darstellung mit einer abgerundeten Bremskontur;
- Figur 5A: eine schematische Darstellung einer Handverstellung für eine Lordosenstütze mit einer polygonartigen Bremsstruktur unter Vorspannung;
- Figur 5B: die Handverstellung der Figur 5A bei Drehung in Antriebsrichtung;
- Figur 6: eine perspektivische Ansicht einer Handverstellung für eine Lordosenstütze mit einem Handrad;
- Figur 7: eine Ansicht eines Lehnengestells mit einer verstellbaren Lordosenstütze in einer Explosionsdarstellung;
- Figur 8: eine perspektivische Explosionsansicht einer Abwandlung der der in der Figur 6 gezeigten Handverstellung, bei der ein Anschlag einer Seilrolle über ein drehbar gelagertes Kopplungsglied mit einem Gegenanschlag des Gehäuses der Handverstellung zum Begrenzen des Verstellweges der Seilrolle zusammenwirkt;
- Figur 9: eine weitere perspektivische Explosionsansicht der in der Figur 8 gezeigten Handverstellung;
- Figur 10: eine weitere perspektivische Explosionsansicht der in den Figuren 7 und 8 dargestellten Handverstellung;
- Figur 11: eine perspektivische Explosionsansicht einer Variante der erfindungsgemäßen Handverstellung, mit einem zusätzlichen Vorspannelement, welches derart gegen die Seilrolle vorgespannt ist, dass diese nicht ungewollt aus einer Sperrstellung geraten kann;
- Figur 12: eine perspektivische Ansicht der in der Figur 11 gezeigten Handverstellung, und
- Figur 13: eine Draufsicht auf die in den Figuren 11 und 12 gezeigte Handverstellung.

In den Figuren sind einander ähnliche oder identische Merkmale mit dem gleichen Bezugszeichen gekennzeichnet.

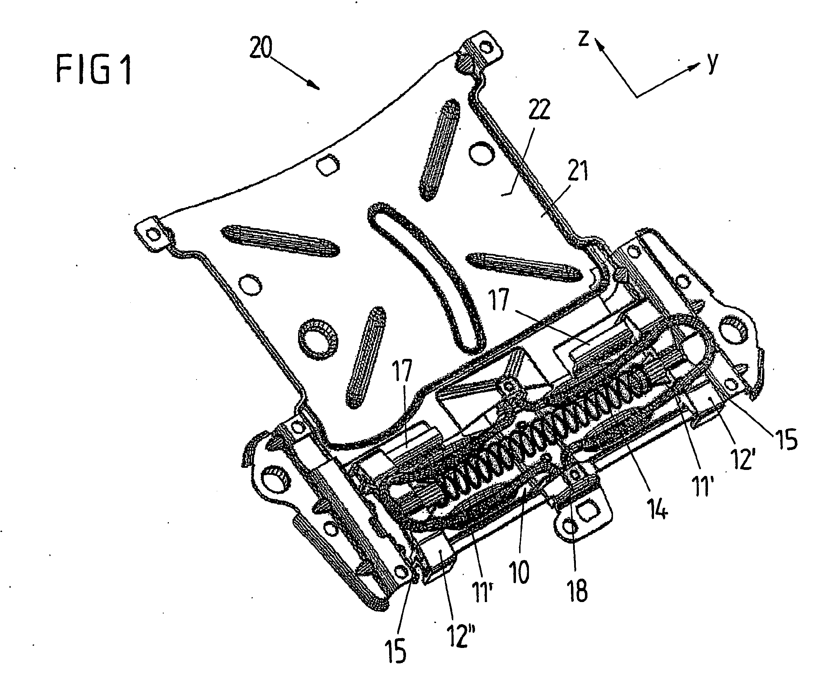

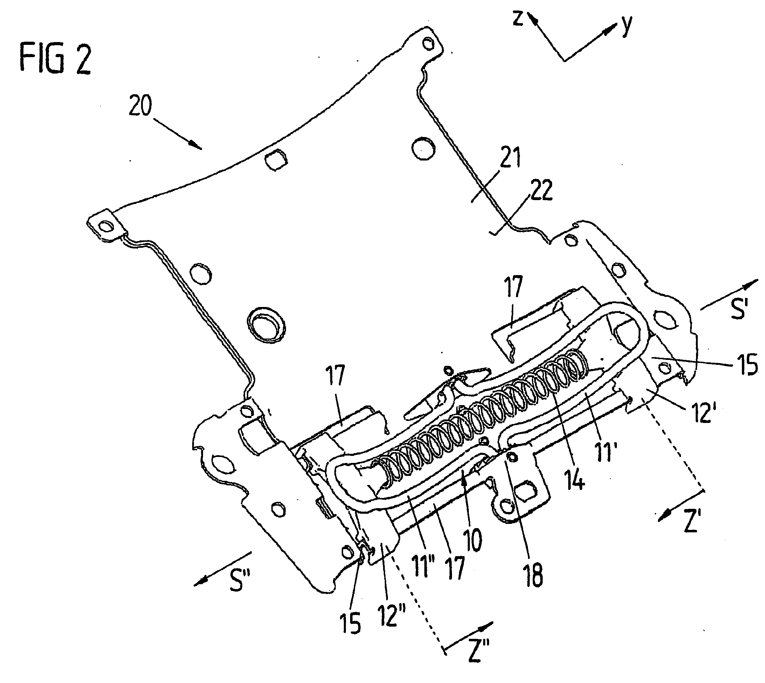

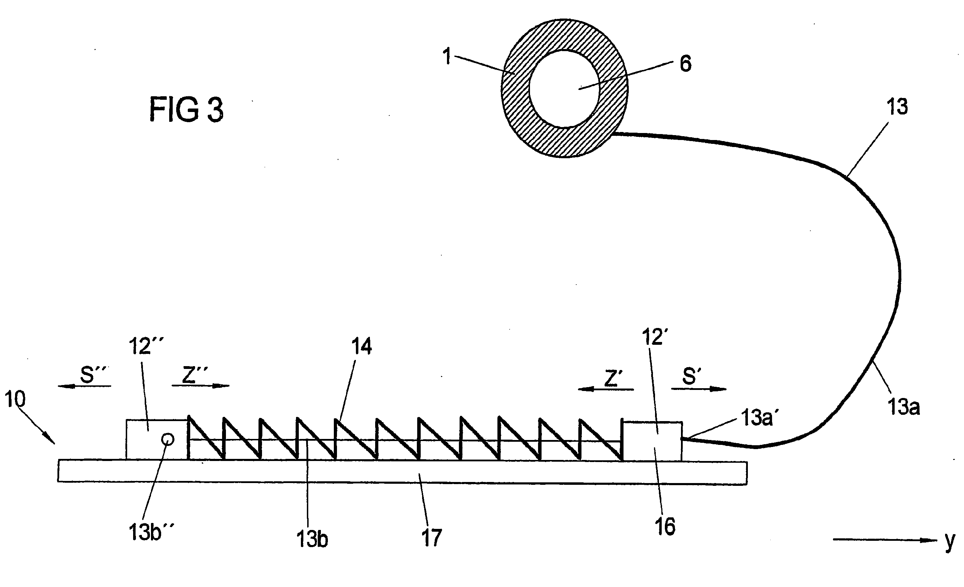

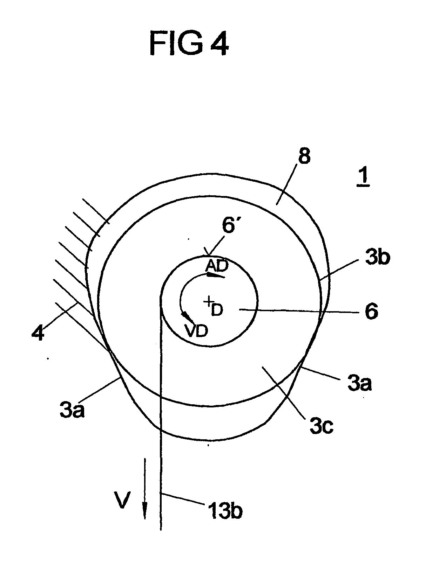

Anhand der Figuren 1 und 2 wird nachfolgend ein Ausführungsbeispiel einer Lordosenstütze für eine Rückenlehne eines Kraftfahrzeugsitzes erläutert werden. Die Lordosenstütze wird durch Betätigung eines Handrads verstellt, das nachfolgend anhand der Figuren 4, 5A, 5B und 6 erläutert werden wird. Die Figur 3 zeigt das Zusammenwirken der Handverstellung aus einer der Figuren 4 bis 6 mit der Lordosenstütze der Figur 1 bzw. 2.

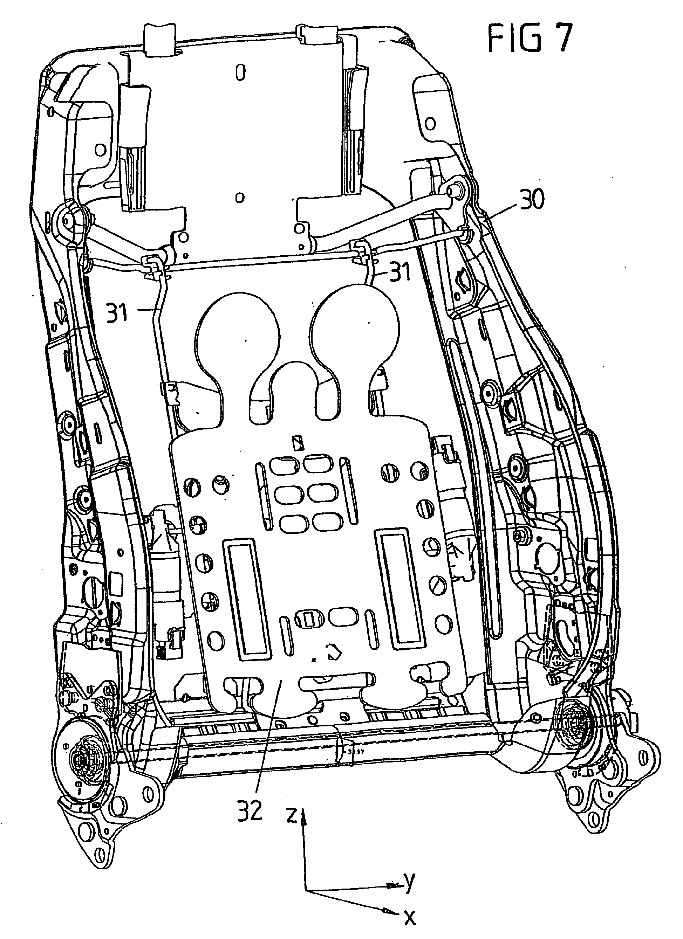

Die Figur 7 weist eine tragende Struktur einer Rückenlehne in Form eines Lehnengestells 30 und zwei voneinander beabstandete, sich jeweils in Lehnenlängsrichtung z erstreckende Streben 31 auf, vor denen eine Lordosenstütze 32 angeordnet ist. Diese ist beispielsweise mittels in den Figuren nicht dargestellter Federelemente an dem Lehnengestell 30 gelagert.

Unter der Lehnenlängsrichtung z wird vorliegend diejenige Richtung verstanden, entlang der sich bei bestimmungsgemäßem Gebrauch der Rückenlehne an einem Kraftfahrzeugsitz die Wirbelsäule einer auf dem entsprechenden Fahrzeugsitz sitzenden Person erstreckt. Bei aufrechter Einstellung der Rückenlehne, d.h., wenn diese im Wesentlichen senkrecht vom Sitzpolster absteht, verläuft die Lehnenlängsrichtung z im Wesentlichen entlang der vertikalen Fahrzeugachse z. Das Lehnengestell 30 sowie die Lordosenstütze 32 liegen dabei jeweils im Wesentlichen in einer Ebene, die durch die Lehnenlängsachse z sowie die senkrecht hierzu verlaufende horizontale Querachse y aufgespannt wird.

In den Figuren 1 und 2 ist ein Träger 20 gezeigt, der ein Trägerblech 21 und eine darauf angeordnete Lordosenverstelleinrichtung 10 aufweist. Das Trägerblech 21 wird mittels geeigneter Fixierungsmittel an den in Lehnenlängsrichtung z erstreckten Streben 31 befestigt. Das Trägerblech 21 erstreckt sich dabei entlang einer Erstreckungsebene des Lehnengestells und entlang der horizontalen Querrichtung y (senkrecht zur Lehnenlängsrichtung z) von der einen Strebe 31 zur anderen Strebe 31. Die Lordosenverstelleinrichtung 10 weist etwa mittig bezüglich der Querausdehnung in Querrichtung y ein Drehlager 18 auf, in dem zwei Stützbügel 11', 11" schwenkbar angelenkt sind.

Jeder der beiden Stützbügel 11', 11" erstreckt sich jeweils von seinen beiden schwenkbar an dem Drehlager 18 angelenkten Enden zu einem der beiden seitlichen Ränder des Trägerblechs 21. Die U-förmigen Stützbügel 11', 11" weisen eine Krümmung auf, so dass sie jeweils eine Rampe mit variabler Krümmung definieren, die mit jeweils einem zugehörigen Gleiter 12', 12" zusammenwirkt.

Die beiden Gleiter 12', 12" sind an jeweils einer an dem Trägerblech 21 angeordneten bzw, ausgebildeten Gleiterführung 17 in Erstreckungsrichtung der Schenkel der U-förmigen Stützbügel 11', 11" geführt. Sie untergreifen dabei die beiden Stützbügel 11', 11" an deren gekrümmten Abschnitten und wirken mit diesen rampenartig nach dem Keilprinzip zusammen. Die beiden Gleiter 12', 12" sind entlang der jeweils zugeordneten Gleiterführung 17 einander entgegengesetzt entlang der horizontalen Querrichtung y mittels eines nicht dargestellten Handantriebs bewegbar. Durch Verschieben der Gleiter 12', 12" entlang der Richtung y parallel zur Erstreckungsebene des Lehnengestells 30 kann mittels der Stützbügel 11', 11" eine Einstellung der Lage bzw. Wölbung der Lordosenstütze 32 entlang einer Richtung x senkrecht zur Erstreckungsebene (yz-Ebene) des Lehnengestells 30 vorgenommen werden. Dies ist darauf zurückzuführen, dass die Gleiter 12', 12" mit entsprechend gekrümmten Abschnitten der Stützbügel 11', 11" nach dem Keilprinzip zusammenwirken, so dass eine Bewegung der Gleiter 12', 12" entlang der Richtung y in eine Bewegung der Stützbügel 11 (nämlich in einer Schwenkbewegung um die Drehlager 18 der Stützbügel 11) umgesetzt wird, welche eine Komponente in x-Richtung senkrecht zur Erstreckungsebene des Lehnengestells 30 aufweist.

Durch die symmetrische Anordnung der beiden Stützbügel 11', 11" und der zugeordneten Gleiter 12', 12" bezüglich einer in Längslehnenrichtung z verlaufenden Symmetrieachse wird dabei eine symmetrische, gleichmäßige Wölbung bzw. Verstellung der Lordosenstütze 32 sichergestellt. Die Stützbügel 11', 11" dienen somit als Verstellelemente zum Verstellen der Position der Lordosenstütze.

Die beiden Gleiter 12', 12" werden von einem Spannelement 14 vorgespannt. Das Spannelement 14 ist im Ausführungsbeispiel als eine Spiralfeder ausgebildet, die sich entlang der Lehnenquerrichtung y erstreckt und die beiden Gleiter 12' und 12" entlang dieser Richtung zu den Streben 31 hin vorspannt (Spannrichtungen S' und S"). Das Spannelement 14 bewirkt eine Vorspannung der beiden Gleiter 12', 12" in einander entgegengesetzte Richtungen, den Spannrichtungen S' und S".

Die Vorspannung bewirkt eine auf die Gleiter 12' und 12" wirkende Schubkraft.

An dem Seitenrand des Trägerblechs 21 sind Gleiteranschläge 15 vorgesehen, die die Gleiterführung 17 nach außen hin begrenzen und verhindern, dass die Gleiter 12' und 12" über den Gleiteranschlag 15 hinaus bewegt werden.

Die Gleiter 12' und 12", die Gleiterführung 17, die Gleitabschläge 15, das Spannelement 14 und das Drehlager 18 bilden zusammen die Lordosenverstelleinrichtung 10, die auf der Vorderseite 22 des Trägerblechs 21 angeordnet ist, und die in einer Einbaustellung dem Rücken eines Benutzers zugewandt ist.

Eine Bewegung des Gleiters 12' entgegen seiner Vorspannrichtung S' ist nur gegen die Vorspannung möglich, die vom Spannelement 14 auf den Gleiter 12' ausgeübt wird (Analoges gilt für Gleiter 12").

In der Figur 3 ist schematisch dargestellt, wie die Gleiter 12' und 12" der Lordosenverstelleinrichtung 10 der Figur 2 verstellt und bewegt werden. Durch die Längsachse des Spannelements 14 verläuft eine Sehne 13b eines Bowdenzugs 13 parallel zur Lehnenquerrichtung y und parallel zur Ebene des Lehnengestells.

Der Bowdenzug 13 dient als Zugmittel zum Übertragen einer Zugkraft, die von einer Handverstellung 1 über den Bowdenzug 13 auf die Gleiter 12' und 12" übertragen wird. Der Bowdenzug 13 weist dabei ein Hüllrohr 13a auf, das sich am Gleiter 12' abstützt und dort endet. Die Sehne 13b des Bowdenzugs 13 ist länger als das Hüllrohr 13a ausgebildet und verläuft im Inneren des Hüllrohrs 13a. Am gleiterseitigen Ende 13a' des Hüllrohrs 13a ragt die Sehne 13b aus dem Hüllrohr 13a hinaus und ist so angeordnet, dass sie den Gleiter 12' durchdringt und sich entlang des Spannelements 14 bis zum zweiten Gleiter 12' erstreckt. Die Sehne 13b ist mit ihrem gleiterseitigen Ende 13b" an dem zweiten Gleiter 12" befestigt.

Das gleiterseitige Ende 13b" der Sehne 13b kann durch Drehung der Handverstellung 1 relativ zu dem gleiterseitigen Ende 13a' des Hüllrohrs 13a bewegt werden. Die Stellung der Handverstellung 1 bestimmt die Länge der Sehne 13b, die über das gleiterseitige Ende 13a' des Hüllrohres 13a hinausragt und somit den Abstand zwischen den beiden Gleitern 12' und 12".

Durch Verkürzen des Abstandes der gleiterseitigen Enden 13a' und 13b" zueinander, was durch Drehung einer Seilrolle 6 der Handverstellung 1 in Antriebsrichtung erfolgt, wird eine Zugkraft auf den Gleiter 12" in einer Zugrichtung Z" ausgeübt, die entgegengesetzt zur Spannrichtung S" des Gleiters 12" verläuft und gegen die Spannung des Spannelements 14 wirkt. Gleichzeitig wird das gleiterseitige Ende 13a' des Hüllrohres 13a entgegen der Spannrichtung S' gegen den Gleiter 12' gedrückt und bewegt den Gleiter 12' in Zugrichtung Z' auf den Gleiter 12" zu. Durch Ausübung einer über den Bowdenzug 13 übertragenen Zugkraft auf den Gleiter 12' und 12" werden diese aufeinander zu in Zugrichtung Z' bzw. Z" bewegt. Gleichzeitig werden sie durch die Gleiterführung 17 geführt.

Der Gleiter 12' dient somit als Stützelement 16 für das gleiterseitige Ende 13a' des Hüllrohres 13a.

Die Bewegung der Gleiter 12' und 12" aufeinander zu erfolgt durch Übertragung einer Zugkraft über den Bowdenzug 13, eine Bewegung der Gleiter voneinander weg erfolgt mit Hilfe der Spannkraft des Spannelements 14. Somit können die Gleiter mit Hilfe eines einzigen Zugmittels 13 gegeneinander bewegt werden.

In einer weiteren erfindungsgemäßen Ausführungsform, die in den Figuren nicht dargestellt ist, kann auch nur ein Gleiter vorgesehen sein, der sich entlang der Lehnenlängsachse z bewegt. Er ist durch ein Spannelement gegen ein Stützelement vorgespannt. Das Verstellprinzip funktioniert analog zur Figur 3 mit dem Unterschied, dass der Gleiter 12' nicht beweglich ist, sondern an seiner Position als Stützelement 16 fixiert ist. In diesem Falle ist auch nur ein Stützbügel (11') als Verstellelement für die Lordosenstütze vorgesehen. Alternativ können zwei parallel zueinander entlang der Lehnenlängsrichtung z verlaufende Gleiter vorgesehen sein, durch deren Bewegung die Stellung jeweils eines Verstellbügels verstellt wird.

Die Figur 4 zeigt eine schematische Darstellung einer Handverstellung 1. Sie dient zur Übertragung einer Zugkraft über ein Zugmittel 13 (Figur 4 zeigt die Sehne 13b des Bowdenzugs 13) auf den Gleiter 12' bzw. 12" (vgl. Figur 3).

Kernstück der Handverstellung 1 ist eine Seilrolle 6, die um eine Drehachse D drehbar gelagert ist. Figur 4 zeigt einen Schnitt durch die Seilrolle 6 senkrecht zur Drehachse D. Auf einer Außenfläche der Seilrolle 6, die die Seilrolle 6 kreisförmig begrenzt, verläuft eine Aufrollfläche 6'. Die Aufrollfläche 6' dient zur Aufnahme und zum Aufrollen der Sehne 13b des Zugmittels 13 aus Figur 3. Die Sehne 13b ist mit dem Ende, das dem gleiterseitigen Ende 13b" (vgl. Figur 3) gegenüberliegt an der Seilrolle 6 befestigt. Bei Drehung der Seilrolle 6 wird die Sehne 13b auf die Aufrollfläche 6' aufgerollt bzw. je nach Drehrichtung von ihr abgerollt. Durch die Drehwinkelposition der Seilrolle 6 wird eingestellt, wie viel Prozent der Sehne 13b auf der Seilrolle 6 auf- und wie viel davon abgerollt sind. Die Seilrolle 6 weist eine Bremsscheibe 3c auf, die ebenfalls drehbar um die Drehachse D gelagert ist. Die Bremsscheibe 3c und die Seilrolle 6 sind verwindungssteif miteinander verbunden und können nicht relativ zueinander verdreht werden. Sie können entweder aus einem einzigen Stück bestehen oder zweistückig ausgebildet sein. Die Seilrolle 6 kann wie die Bremsscheibe 3c scheibenförmig ausgebildet sein.

Die Bremsscheibe 3c weist eine der Drehachse D abgewandte und die Drehachse D umlaufende Außenfläche 3b auf, die in einer Sperrstellung der Handverstellung 1 in Reibungskontakt mit einer Bremsfläche 3a steht. Im Ausführungsbeispiel der Figur 4 sind zwei Bremsflächen 3a vorgesehen, die keilförmig zueinander verlaufen. Der gedachte Schnitt der beiden Bremsflächen 3a verläuft dabei parallel zur Drehachse D und liegt der Drehachse D entlang des Verlaufs der Sehne 13b gegenüber.

Die Bremsflächen 3a sind an einer der Seilrolle 6 quer zur Drehachse D zugewandten Innenseite eines Gehäuses 4 der Handverstellung 1 vorgesehen und begrenzen eine Gehäuseaussparung 8 des Gehäuses 4, in der die Seilrolle 6 angeordnet ist. In der Sperrstellung der Handverstellung 1 gemäß der Figur 4 wird die Bremsscheibe 3c mit ihrer Außenfläche 3b gegen die beiden Bremsflächen 3a gedrückt und zwischen ihnen verkeilt.

Die Sehne 13b führt von der Seilrolle 6 entlang einer Verlaufsrichtung V weg und ist - wie in Figur 3 gezeigt - an dem Gleiter 12" befestigt, auf den eine Vorspannung in der Richtung S" wirkt, die von dem Spannelement 14 erzeugt wird. Die aus der Federkraft des Spannelements 14 resultierende Spannkraft überträgt sich vom Gleiter 12" über die Sehne 13b auf die Seilrolle 6 der Handverstellung 1 der Figur 4. Die Vorspannung bewirkt also eine Kraft auf die Seilrolle 6 in Richtung der Verlaufsrichtung V der Sehne 13b. Durch die Beabstandung der Aufrollfläche 6' von der Drehachse D bewirkt die Vorspannung ein Drehmoment auf die Seilrolle 6 um die Drehachse D in Abtriebsrichtung VD.

Eine Verkürzung des von der Seilrolle 6 abgerollten Teils der Sehne 13b kann durch Drehung der Seilrolle 6 in Antriebsrichtung erreicht werden, während die Vorspannung dafür sorgt, dass die Sehne 13b bei Drehung in Abtriebsrichtung von der Seilrolle abgewickelt wird. Hierdurch ist ein Verstellen der Gleiterposition auf der Gleiterführung 17 (vgl. Fig. 1) durch ein einzige gewindelose Seilrolle möglich. Bei einer Drehung der Seilrolle 6 wird entweder die Reibungskraft zwischen der Außenfläche 3b und den Bremsflächen 3a durch Anlegen einer Drehkraft überwunden oder die Seilrolle 6 um ein kurzes Stück entgegen der Verlaufsrichtung V bewegt, so dass die Außenfläche 3b nicht mehr in Kontakt, d.h., in Eingriff mit der Bremsfläche 3a steht.

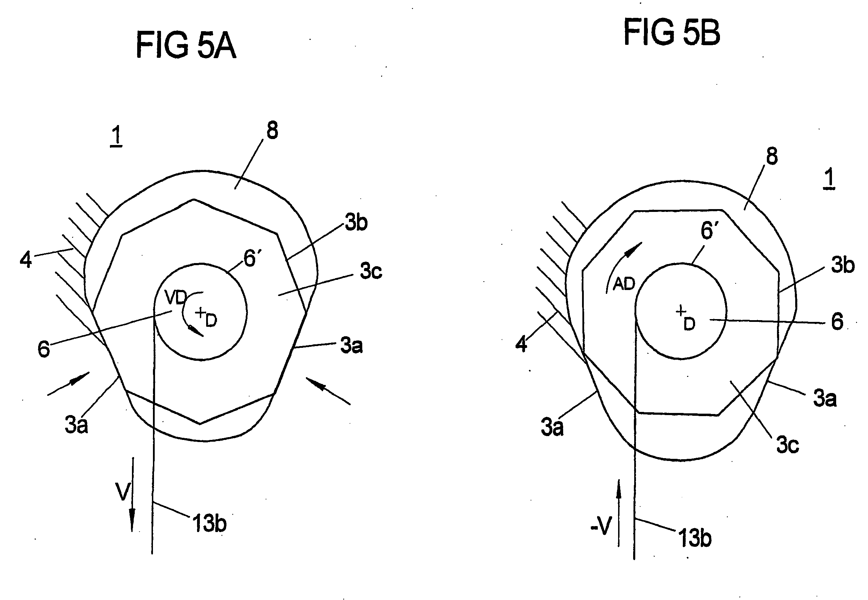

Die Figuren 5A und 5B zeigen eine Ausführungsvariante zur Handverstellung 1 der Figur 4. Während in der Figur 4 die Querschnittskontur (die entsprechende Querschnittsebene verläuft senkrecht zur Drehachse D) der Außenfläche 3b der Bremsscheibe 3c glatt ausgebildet ist, ist die Kontur der Außenfläche 3b der Figur 5 polygonartig ausgebildet und weist entlang des Umfangs der Bremsscheibe 3c mehrere Ecken auf. Zwischen den Ecken verläuft die Kontur (Bremskontur) der Außenfläche 3b geradlinig.

In der in Figur 5A gezeigten Sperrstellung liegen zwei flächige Bereiche der Außenfläche 3b an den Bremsflächen 3a an. Für ein Verdrehen der Seilrolle 6 muss nun nicht nur die Reibungskraft überwunden werden, sondern auch die Seilrolle 6 relativ zum Gehäuse 4 bewegt werden. Obwohl entlang der Verlaufsrichtung V über die Sehne 13b eine Zugkraft auf der Seilrolle 6 wirkt, dreht sie sich nicht, sondern bleibt in ihrer Sperrstellung.

In Figur 5B wird die Seilrolle 6 in Antriebsrichtung AD gedreht, so dass eine Zugkraft in negativer Verlaufsrichtung V auf die Sehne 13b übertragen wird. Durch die Anzahl der Polygonecken der Bremskontur 3b wird die Anzahl der verschiedenen Sperrstellungen festgelegt. Je mehr Polygonecken die Bremsscheibe 3c aufweist, in umso mehr Stufen kann die Lordosenstütze verstellt werden. Die kreisförmige Ausbildung der Bremsscheibe 3c im Ausführungsbeispiel der Figur 4 resultiert in einer stufenlosen Einstellung.

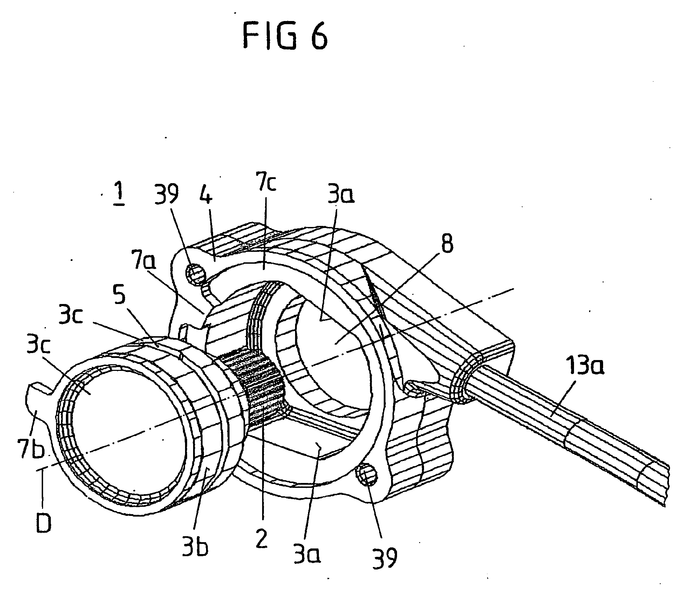

Figur 6 zeigt ein weiteres Ausführungsbeispiel einer erfindungsgemäßen Handverstellung 1 in einer Explosionsdarstellung. Die Außenfläche 3b ist wieder im Querschnitt polygonartig ausgebildet (Bremskontur). An der Seilrolle 6 ist neben den Bremsscheiben 3c auch ein Handrad 2 verwindungssteif relativ zur Seilrolle 6 befestigt. Es kann von einem Sitzbenutzer zur Verstellung der Lordosenstütze betätigt werden, indem es um die Drehachse D gedreht wird.

Zwischen den Bremsscheiben 3c ist eine Seilnut 5 ausgebildet, die zur Aufnahme der Sehne eines Bowdenzugs dient, dessen Hüllrohr 13a gegen das Gehäuse 4 der Handverstellung 1 abgestützt ist. Die Sehne 13b des Bowdenzugs 13 wird in der Seilnut 5 auf die Aufrollfläche 6' der Seilrolle 6 aufgewickelt (in Figur 6 nicht zu sehen). Beim Drehen der Seilrolle 6 in Antriebsrichtung AD und somit beim Aufwickeln der Sehne 13b wird eine Zugkraft bereitgestellt, die entlang der Sehne 13b immer in die gleiche Richtung wirkt.

An einer der Bremsscheiben 3c ist ein Anschlag 7b ausgebildet, der bei Drehung entlang einer Führung 7c geführt wird. Die Führung 7c ist als Aussparung im Gehäuse 4 ausgebildet und wird von einem Gegenanschlag 7a unterbrochen, der zur Begrenzung des Drehwinkels dient, um den die Seilrolle 6 gedreht werden kann. Dabei dient der Anschlag 7b sowohl zur Begrenzung des Verstellweges bei Drehung der Seilrolle 6 in Antriebsrichtung AD als auch bei Drehung der Seilrolle 6 in Abtriebsrichtung VD. Der maximale Verstellweg beträgt dabei annähernd 360°.

Zum Festlegen des Gehäuses 4 an einem Träger der Handverstellung 1 sind an dem Gehäuse 4 zwei Durchgangsöffnungen 39 vorgesehen, die entlang der Drehachse D verlaufen und einander quer zur Drehachse D gegenüberliegen. In diese Durchgangsöffnungen 39 können Schrauben oder ähnliche Befestigungsmittel eingeführt und am Träger der Handverstellung 1 festgelegt werden.

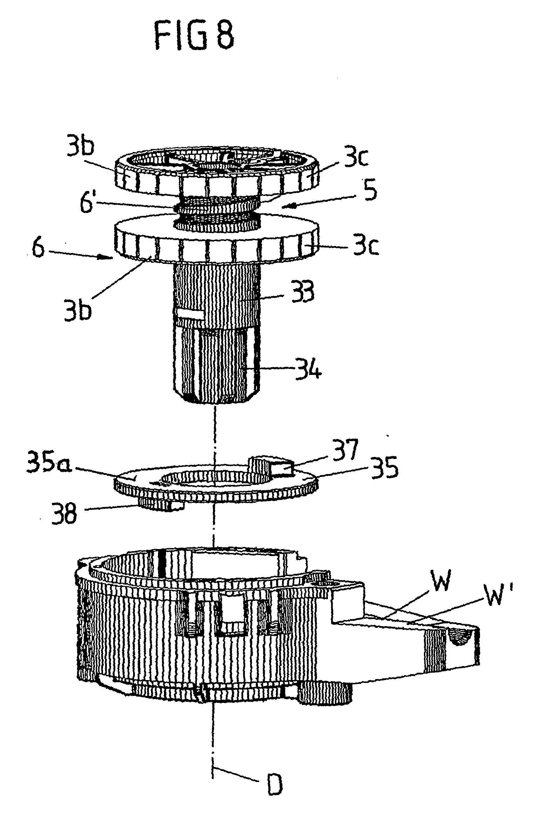

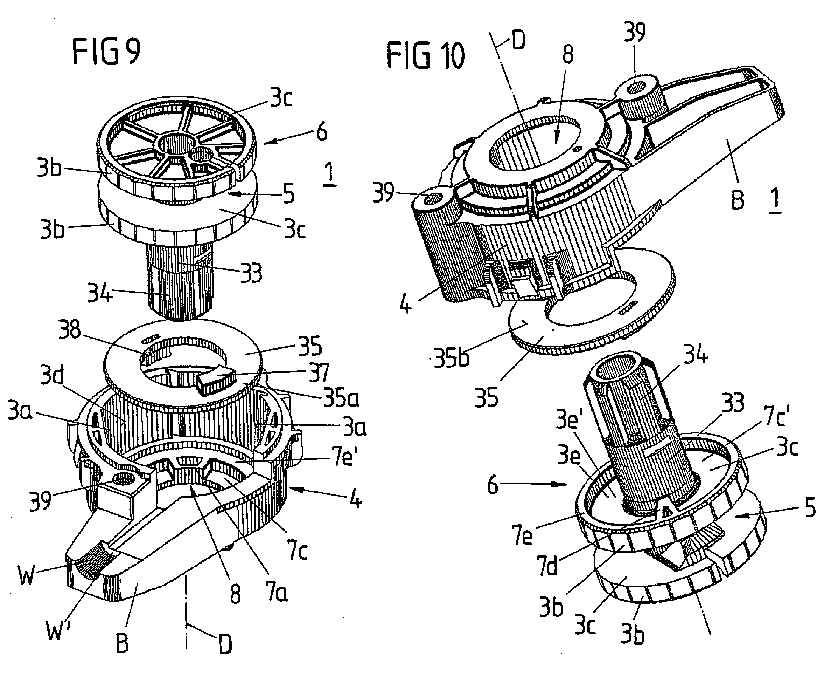

Figur 8 zeigt im Zusammenhang mit den Figuren 9 und 10 eine Explosionsansicht einer Abwandlung der in der Figur 6 gezeigten Handverstellung 1. Zum Verstellen eines Kraftfahrzeugteils, insbesondere einer Lordosenstütze eines Kraftfahrzeugsitzes, ist eine Seilrolle 6 vorgesehen, die um eine Drehachse D drehbar in einem Gehäuse 4 gelagert ist. Auf die Seilrolle 6 kann entsprechend den Figuren 3, 4, 5A und 5B eine Zugmittel in Form einer Sehne 13 eines Bowdenzuges aufgerollt sein, welches zum Koppeln der Handverstellung 1 mit einer Verstelleinrichtung, insbesondere einer Lordosenverstelleinrichtung 10 (vgl. Figuren 1 bis 3) dient. Dabei ist ein freier Endabschnitt des die Sehne 13b umgebenden Hüllrohres 13a in einer Aussparung W eines vom Gehäuse 4 abstehenden Bereichs B des Gehäuses 4 festgelegt, so dass sich ein freies Ende des Hüllrohres 13a an einem Widerlager W' abstützen kann, das durch eine stufenartige Verengung der Aussparung W gebildet wird, entlang der die aus dem Hüllrohr 13 a herausragende Sehne 13b des Bowdenzuges in das Gehäuse 4 geführt ist, wo sie auf einer Aufrollfläche 6' (vgl. Figuren 4, 5A und 5B) abschnittsweise aufgerollt und über einen freien Endbereich des auf die Aufrollfläche 6' aufgerollten Teiles der Sehne 13b an der Seilrolle 6 befestigt ist. Hierzu kann dieser freie Endbereich beispielsweise verbreitert sein und in eine an der Seilrolle 6 ausgebildete Aussparung eingreifen, so dass die Seilrolle 6 eine an der Sehne 13b angreifende Zugkraft aufnehmen kann.

Die Seilrolle 6 umfasst eine entlang der Drehachse D erstreckte Welle 33 sowie zwei die Welle 33 umlaufende Bremsscheiben 3c gemäß der Figur 6, die entlang der Drehachse D zueinander beabstandet zu beiden Seiten der die Welle 33 umlaufenden Aufrollfläche 6' (vgl. Figuren 4, 5A und 5B) von der Welle 33 abstehen und dabei die zwischen den beiden Bremsscheiben 3c umlaufende Seilnut 5 bilden (vgl. Figur 6), die zur Aufnahme des auf die Seilrolle 6 aufgerollten Teils der Sehne 13b dient.

Die Seilrolle 6 ist entlang der Drehachse D mit einem freien Endbereich 34 der Welle 33 voran in eine mit der Drehachse D fluchtende, durchgängige Gehäuseaussparung 8 des Gehäuses 4 eingeführt derart, dass der freie Endbereich 34 der Welle 33 entlang der Drehachse D aus dem Gehäuse 4 herausgeführt ist und die Seilrolle 6, und zwar die beiden senkrecht zur Welle 33 erstreckten Bremsscheiben 3c samt Seilnut 5 im Querschnitt vom Gehäuse 4 umgeben sind. Dabei sind die Außenseiten 3b der Bremsscheiben 3c gemäß der Figur 6 einer der Seilrolle 6 zugewandten Innenseite 3d des Gehäuses 4 zugewandt und weisen gemäß Figur 6 in einer quer zur Drehachse D verlaufenden Querschnittsebene eine kreisförmige, polygonartige Kontur auf. Oder anders gesagt, die Außenflächen 3b der beiden Bremsscheiben 3c setzen sich aus planen Flächensegmenten zusammen, die jeweils mit einem benachbarten Flächensegment eine Kante ausbilden, d.h., zueinander angewinkelt sind.

Die Außenflächen 3b sind auf diese Weise dazu ausgebildet gemäß den Figuren 5A und 5B in einer Sperrstellung der Seilrolle 6 mit zueinander keilförmig angewinkelten Bremsflächen 3a, die an der Innenseite 3d des Gehäuses 4 vorgesehen sind, in Eingriff zu sein.

Zum Betätigen der Handverstellung 1, und zwar durch Drehen der Seilrolle, kann auf den freien Endbereich 34 der Welle 33 ein Handrad aufgeschoben werden (in den Figuren 8 bis 10 nicht gezeigt). Damit das Handrad auf einfache Weise drehfest mit der Welle 33 verbindbar ist, sind am freien Endbereich 34 der Welle 33 entlang der Drehachse D erstreckte Ausnehmungen ausgebildet, in die Formschlussbereiche des Handrades zum drehfesten Festlegen des Handrades an der Welle 33 eingreifen können.

Wird die Seilrolle 6 durch entsprechendes Betätigen des Handrades 2 (in den Figuren 8 bis 10 nicht gezeigt) aus der Sperrstellung herausbewegt, kann die Seilrolle 6 in einer Antriebsrichtung AD und einer der Antriebsrichtung AD entgegen gesetzten Abtriebsrichtung VD (vgl. Figuren 4, 5A und 5B) zum Verstellen der Lordosenverstelleinrichtung 10 bzw. der Lordosenstütze 32 gemäß der Figuren 1 bis 3 zwischen einer ersten und einer zweiten Endposition hin und her gedreht werden.

Zum Begrenzen des von der ersten Endposition bis zur zweiten Endposition verlaufenden Verstellweges weist die Seilrolle 6 einen entlang der Drehachse D von der Seilrolle 6 abstehenden Anschlag 7d auf, der an einer dem Gehäuse 4 zugewandten Innenseite 3e derjenigen Bremsscheibe 3c ausgebildet ist, die entlang der Drehachse D eine geringere Beabstandung zum freien Endbereich 34 der Welle 33 aufweist. Diese Bremsscheibe 3c wird im Folgenden auch als innere Bremsscheibe 3c bezeichnet werden.

Der Anschlag 7d ist dazu vorgesehen, beim Drehen der Seilrolle 6 entlang der Antriebs- oder Abtriebsrichtung AD, VD an einem ersten Anschlagsbereich 37 eines Kopplungsgliedes 35 anzuschlagen, über das der Anschlag 7d zur Begrenzung des Verstellweges der Seilrolle 6 mit einem gehäuseseitigen Gegenanschlag 7a zusammenwirken kann.

Das Kopplungsglied 35 umgreift den freien Endbereich 34 der Welle 33 quer zur Drehachse D ringförmig und weist eine dem Anschlag 7d zugewandte erste Seite 35a und eine dem Anschlag 7d abgewandte zweite Seite 35b auf, wobei der erste Anschlagsbereich 37 von der ersten Seite 35a des Kopplungsgliedes 35 entlang der Drehachse D absteht, und zwar entgegen gesetzt zum Anschlag 7d, so dass dieser beim Drehen der Seilrolle entlang der Antriebsrichtung AD oder entlang der Abtriebsrichtung VD am ersten Anschlagsbereich 37 anschlagen kann. Je nach Stellung des Anschlags 7d bezüglich des ersten Anschlagsbereiches 37 kann die Seilrolle 6 maximal um einen Drehwinkel von 360° gedreht werden, bevor der Anschlag 7d in Eingriff mit dem ersten. Anschlagsbereich 37 tritt. Nach dem Anschlagen des Anschlags 7d am ersten Anschlagsbereich 37 nimmt die Seilrolle 6 das Kopplungsglied 35 bei weitergehender (gleichsinniger) Drehung der Seilrolle 6 mit. Dabei liegt das Kupplungsglied 35 - zum Zwecke seiner drehbaren Lagerung im Gehäuse 4 - mit seiner ersten Seite 35a an einer an der Innenseite 3e des inneren Bremsrades 3c vorgesehenen ersten Gleitfläche 7e sowie mit seiner zweiten Seite 35b an einer ringförmigen, am Gehäuse 4 ausgebildeten zweiten Gleitfläche 7e' an.

Zum Begrenzen der gemeinsamen Drehung des Kupplungsgliedes 35 und der Seilrolle 6 ist nun an der der ersten Seite 35a abgewandten zweiten Seite 35b des Kupplungsgliedes 35 ein zweiter Anschlagsbereich 38 vorgesehen, der entlang der Drehachse D von der zweiten Seite 35b des Kupplungsgliedes 35 absteht und zum Anschlagen am Gegenanschlag 7a des Gehäuses 4 vorgesehen ist. Da das Kupplungsglied 35 ebenfalls um maximal etwa 360° (in Bezug auf das Gehäuse 4) drehbar ist, bevor der zweite Anschlagsbereich 38 gegen den Gegenanschlag 7a stößt, resultiert aus der Verwendung des drehbaren Kopplungsgliedes 35 insgesamt ein maximaler Verstellweg der Seilrolle entlang oder entgegen der Antriebsrichtung AD von rund 720°. Damit der erste und der zweite Anschlagsbereich 37, 38 des Kopplungsgliedes 35 beim Verstellen der Seilrolle 6 definiert entlang des Verstellweges geführt werden können, ist am Gehäuse 4 eine (vom Gegenanschlag 7a unterbrochene) Führung 7c ausgebildet, an der entlang der zweite Anschlagsbereich 38 gleiten kann, und am inneren Bremsrad 3c ist eine dem ersten Anschlagsbereich 37 entlang der Drehachse D zugewandte, die Drehachse D ringförmig umlaufende Aussparung 3e' vorgesehen, in die der erste Anschlagsbereich 37 derart eingreift, dass er beim Verstellen der Seilrolle 6 bzw. des Kopplungsgliedes 35 durch die Aussparung 3e' geführt wird.

Natürlich können mehrere derartige Kopplungsglieder 35 verwendet werden, um den maximalen Verstellwinkel jeweils um weitere (annähernd) 360° zu verlängern.

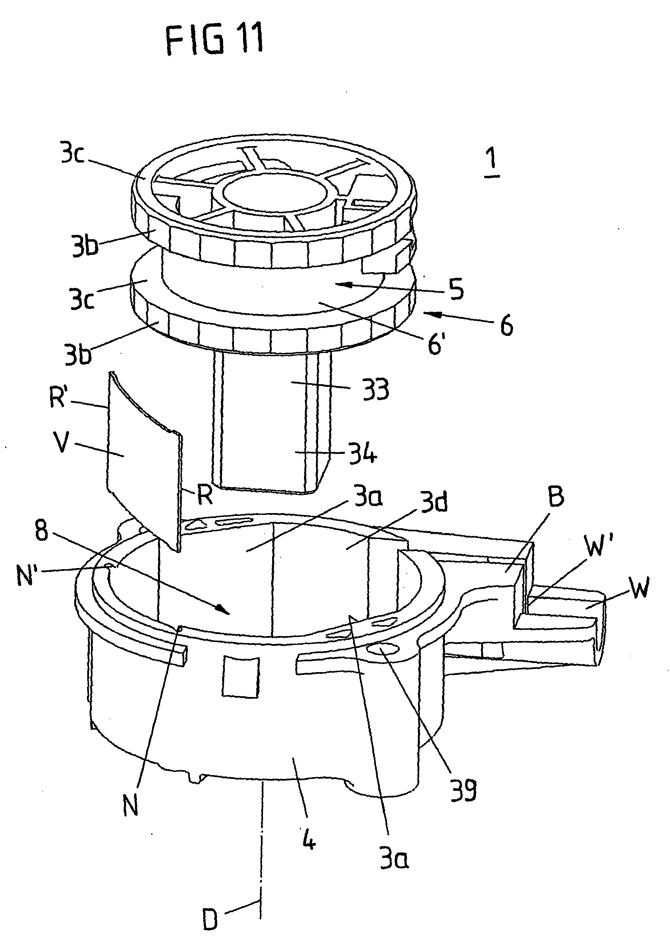

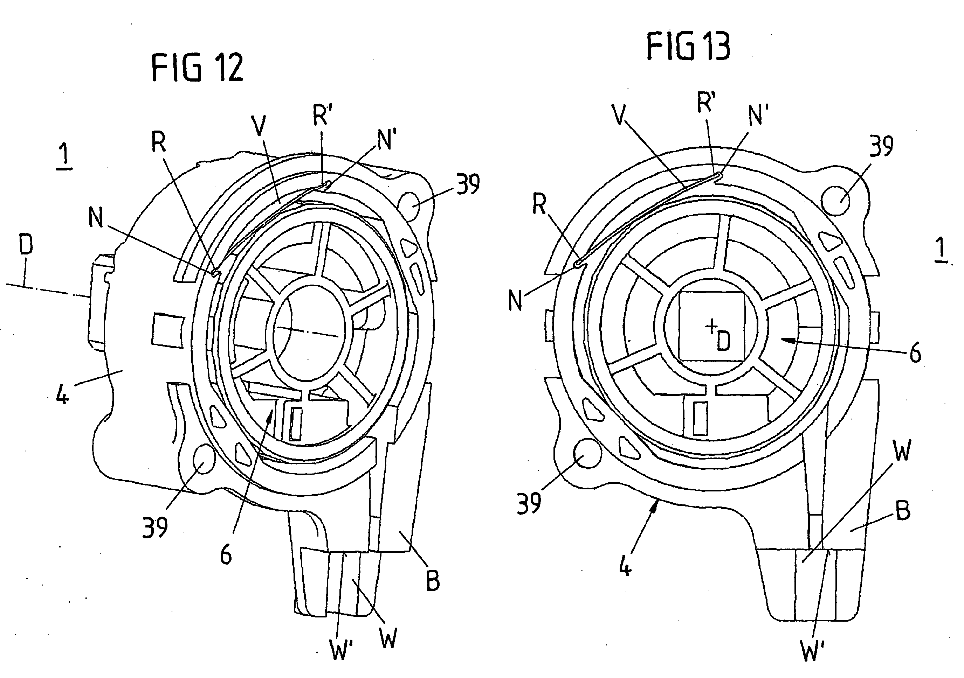

Figur 11 zeigt im Zusammenhang mit den Figuren 12 und 13 eine Abwandlung der in der Figur 6 bzw. den Figuren 8 bis 10 gezeigten Art, bei der im Unterschied zur Figur 6 bzw. den Figuren 8 bis 10 an der Innenseite 3d des Gehäuses 4 ein zusätzliches flächig ausgebildetes Vorspannelement V vorgesehen ist. Das Vorspannelement V ist gegen die Seilrolle 6 vorgespannt und drückt diese gegen die beiden schräg aufeinander zu laufenden Bremsflächen 3a, so dass die Seilrolle 6 auch bei geringer an der Sehne 13b entlang der Verlaufrichtung V angreifender Vorspannung in einer Nichtbetätigungsstellung mit den Bremsflächen 3a verkeilt ist (Form- und Reibschluss). Hierzu liegt das Vorspannelement V unter Vorspannung an den Außenflächen 3b der Bremsscheiben 3c der Seilrolle 6 an, wobei das Vorspannelement vorzugsweise als eine Blattfeder ausgebildet ist.

Zum Festlegen des Vorspannelementes V sind an der Innenseite 3d des Gehäuses 4 entlang der Drehachse D erstreckte Nuten N, N' ausgebildet, die quer zur Drehachse D sowohl einander als auch den Bremsflächen 3a gegenüberliegen. In diese Nuten N, N' ist das Vorspannelement V entlang der Drehachse D mit zwei entlang der Drehachse D erstreckten Randbereichen R, R' des Vorspannelementes V eingeführt, wobei die Nuten N, N' jeweils einen der beiden Randbereiche R, R' im Querschnitt umgreifen.

## Patentansprüche

1. Träger (20) mit einer Lordosenverstelleinrichtung (10) für einen Kraftfahrzeugsitz, der dazu ausgebildet und vorgesehen ist, in einer Einbauposition in einem Lehnengestell (30) eines Kraftfahrzeugsitzes hinter einer Lordosenstütze (32) zum Abstützen des Rückens eines Sitzbenutzers angeordnet zu sein, mit
- einer Vorderseite, die in der Einbauposition dem Rücken eines Sitzbenutzers zugewandt ist,
- einer an der Vorderseite des Trägers angeordneten Lordosenverstelleinrichtung (10) zur Einstellung der Lage der Lordosenstütze (32) senkrecht zur Erstreckungsebene des Lehnengestells, wobei
- die Lordosenverstelleinrichtung (10) mindestens ein mit der Lordosenstütze (32) in Wirkverbindung zu bringendes Verstellelement (11'; 11") und mindestens ein bezüglich des Verstellelements (11'; 11 ") bewegbaren Gleiter (12'; 12") umfasst, die derart zusammenwirken, dass bei Bewegung des Gleiters (12'; 12") das Verstellelement (11'; 11") entlang einer Richtung mit einer Richtungskomponente senkrecht zur Bewegungsrichtung des Gleiters (12'; 12") verstellt wird und hierbei in jener Richtung auf die Lordosenstütze einwirkt,
**dadurch gekennzeichnet,**
**dass** zwei Gleiter (12'; 12") vorgesehen sind, die einerseits in entgegengesetzten Spannrichtungen (S'; S") vorgespannt und jeweils relativ zu einem Verstellelement (11'; 11 ") bewegbar sind, und die andererseits durch eine über ein Zugmittel (13, 13a, 13b) auf die Gleiter (12'; 12") übertragene Zugkraft in entgegengesetzte Zugrichtungen (Z'; Z") bewegbar sind.

2. Träger nach Anspruch 1 **dadurch gekennzeichnet, dass** sich die Gleiter (12'; 12") in Spannrichtung (S'; S") bewegen, wenn die über das Zugmittel (13, 13a, 13b) auf die Gleiter (12'; 12") übertragene Zugkraft dem Betrage nach kleiner ist als die Vorspannung der Gleiter (12'; 12").

3. Träger nach Anspruch 1 oder 2, **dadurch gekennzeichnet, dass** die Gleiter (12'; 12") durch die über das Zugmittel (13, 13a, 13b) auf die Gleiter (12'; 12") übertragene Zugkraft in die Zugrichtungen (Z'; Z") bewegbar sind.

4. Träger nach Anspruch 3, **dadurch gekennzeichnet, dass** sich die Gleiter (12'; 12") in den Zugrichtungen (Z'; Z") bewegen, wenn die über das Zugmittel (13, 13a, 13b) auf die Gleiter (12'; 12") übertragene Zugkraft dem Betrage nach größer ist als die Vorspannung der Gleiter (12'; 12").

5. Träger nach einem der vorangegangenen Ansprüche, **dadurch gekennzeichnet, dass** die Spannrichtungen (S'; S") und die Zugrichtungen (Z'; Z") der Gleiter (12'; 12") entgegengesetzt zueinander verlaufen.

6. Träger nach Anspruch 1, **dadurch gekennzeichnet, dass** die zwei Gleiter (12'; 12") über ein Spannelement (14) miteinander gekoppelt sind, das die Vorspannung der Gleiter (12'; 12") bewirkt.

7. Träger nach einem der vorangegangenen Ansprüche, **dadurch gekennzeichnet, dass** die Übertragung einer Zugkraft über das Zugmittel (13, 13a, 13b) durch eine Handverstellung (1) erfolgt.

8. Träger nach Anspruch 7, **dadurch gekennzeichnet, dass** die Handverstellung (1) ein Handrad (2) aufweist.

9. Träger nach einem der vorangegangenen Ansprüche, **gekennzeichnet durch** eine Sperre (3a, 3b, 3c), die in einer Sperrstellung verhindert, dass die Gleiter (12'; 12") durch die Vorspannung der Gleiter (12'; 12") in Spannrichtung (S'; S") bewegt werden.

10. Träger nach Anspruch 9, **dadurch gekennzeichnet, dass** bei gelöster Sperre (3a, 3b, 3c) und ohne über das Zugmittel (13, 13a, 13b) auf die Gleiter (12'; 12") eine Zugkraft zu übertragen, die Gleiter (12'; 12") durch die Vorspannung in die Spannrichtungen (S'; S") bewegt werden.

11. Träger nach einem der vorangegangenen Ansprüche, **dadurch gekennzeichnet, dass** die Vorspannung der Gleiter (12'; 12") durch eine Feder (14) und/oder ein elastisches Element bereitgestellt wird.

12. Träger nach einem der vorangegangenen Ansprüche, **dadurch gekennzeichnet, dass** das Zugmittel (13, 13a, 13b) als Seilzug ausgebildet ist.

13. Träger nach einem der vorangegangenen Ansprüche, **dadurch gekennzeichnet, dass** das Zugmittel (13, 13a, 13b) als Bowdenzug (13) ausgebildet ist, dessen Hüllrohr (13a) sich an einem Stützelement (16) abstützt, auf das auch ein Spannelement (14) einwirkt, das die Vorspannung der Gleiter (12'; 12") bewirkt.

14. Träger nach Anspruch 13, **dadurch gekennzeichnet, dass** einer der zwei Gleiter (12") als Stützelement (16) dient, auf das sich das Hüllrohr (13a) des Bowdenzuges (13) abstützt und auf das das Spannelement (14) einwirkt.

15. Träger nach einem der vorangegangenen Ansprüche, **dadurch gekennzeichnet, dass** die Gleiter (12'; 12") im Wesentlichen parallel zu der Erstreckungsebene des Lehnengestells (30) bewegbar sind.

16. Träger nach einem der vorangegangenen Ansprüche, **dadurch gekennzeichnet, dass** die Gleiter (12'; 12") im Wesentlich geradlinig bewegbar sind.

17. Träger nach einem der vorangegangenen Ansprüche, **dadurch gekennzeichnet, dass** mindestens ein Gleiteranschlag (15) die Bewegung der Gleiter (12'; 12") begrenzt.

18. Träger nach einem der vorhergehenden Ansprüche, **dadurch gekennzeichnet, dass** die Gleiter (12'; 12") mittels einer Gleiterführung (17) geführt sind.

## Claims

1. Support (20) with a lumbar adjuster device (10) for a motor vehicle seat, which is designed and provided to be arranged, in an installed position in a backrest frame (30) of a motor vehicle seat, behind a lumbar support (32) for supporting a seat user's back, with
- a front side which, in the installed position, faces a seat user's back,
- a lumbar adjuster device (10) being arranged on the front side of the support for setting the position of the lumbar support (32) perpendicular to the plane of extent of the backrest frame, wherein
- the lumbar adjuster device (10) comprises at least one adjuster element (11'; 11") to be brought into operative connection with the lumbar support (32), and at least one slide (12'; 12") which is movable with respect to the adjuster element (11'; 11"), said adjuster element (11'; 11") and slide (12'; 12") interacting in such a manner that, upon movement of the slide (12'; 12"), the adjuster element (11'; 11 ") is adjusted along a direction with a directional component perpendicular to the direction of movement of the slide (12'; 12") and, in the process, acts in that direction on the lumbar support,
**characterized in that**
two slides (12'; 12") are provided, which on the one hand are pretensioned in opposite tensioning directions (S'; S") and each are movable relative to an adjuster element (11'; 11") and which on the other hand are movable in opposite drawing directions (Z';Z") by a drawing force transmitted to the slides (12'; 12") via a drawing means (13, 13a, 13b).

2. Support according to claim 1, **characterized in that** the slides (12'; 12") move in tensioning direction (S'; S") if the amount of drawing force transmitted to the slides (12'; 12") via the drawing means (13, 13a, 13b) is smaller than the pretensioning of the slides (12'; 12").

3. Support according to claim 1 or 2, **characterized in that** the slides (12'; 12") are movable in the drawing directions (Z'; Z") by the drawing force transmitted to the slides (12'; 12") via the drawing means (13, 13a, 13b).

4. Support according to claim 3, **characterized in that** the slides (12'; 12") move in the drawing directions (Z'; Z") when the amount of drawing force transmitted to the slides (12'; 12") via the drawing means (13, 13a, 13b) is greater than the pretensioning of the slides (12'; 12").

5. Support according to one of the preceding claims, **characterized in that** the tensioning directions (S'; S") and the drawing directions (Z'; Z") of the slides (12'; 12") run in opposite directions to each other.

6. Support according to claim 1, **characterized in that** the two slides (12'; 12") are coupled to each other via a tensioning element (14) which brings about the pretensioning of the slides (12'; 12").

7. Support according to one of the preceding claims, **characterized in that** the transmission of a drawing force via the drawing means (13, 13a, 13b) takes place by means of a manual adjustment means (1).

8. Support according to claim 7, **characterized in that** the manual adjustment means (1) comprises a hand wheel (2).

9. Support according to one of the preceding claims, **characterized by** a catch (3a, 3b, 3c) which, in a blocking position, prevents the slides (12'; 12") from being moved in tensioning direction (S'; S") by the pretensioning of the slides (12'; 12").

10. Support according to claim 9, **characterized in that**, with the catch (3a, 3b, 3c) released and without transmitting a drawing force to the slides (12'; 12") via the drawing means (13, 13a, 13b), the slides (12'; 12") are moved in the tensioning directions (S'; S") by the pretensioning.

11. Support according to one of the preceding claims, **characterized in that** the pretensioning of the slides (12'; 12") is provided by a spring (14) and/or an elastic element.

12. Support according to one of the preceding claims, **characterized in that** the drawing means (13, 13a, 13b) is designed as a cable pull.

13. Support according to one of the preceding claims, **characterized in that** the drawing means (13, 13a, 13b) is designed as a Bowden cable (13), the casing tube (13a) of which is supported on a supporting element (16) on which a tensioning element (14) bringing about the pretensioning of the slides (12'; 12") also acts.

14. Support according to claim 13, **characterized in that** one of the two slides (12") serves as a supporting element (16) on which the casing tube (13a) of the Bowden cable (13) is supported and on which the tensioning element (14) acts.

15. Support according to one of the preceding claims, **characterized in that** the slides (12'; 12") are movable essentially parallel to the plane of extent of the backrest frame (30).

16. Support according to one of the preceding claims, **characterized in that** the slides (12'; 12") are movable essentially rectilinearly.

17. Support according to one of the preceding claims, **characterized in that** at least one slide stop (15) restricts the movement of the slides (12'; 12").

18. Support according to one of the preceding claims, **characterized in that** the slides (12'; 12") are guided by means of a slide guide (17).

## Revendications

1. Support (20) avec un système de réglage lombaire (10) pour un siège de véhicule automobile, réalisé et prévu pour être agencé, dans une position d'intégration dans une ossature de dossier (30) d'un siège de véhicule automobile, derrière un soutien lombaire (32) pour soutenir le dos d'un utilisateur du siège, comprenant
- une face avant qui est tournée dans la position d'intégration vers le dos d'un utilisateur du siège,
- un système de réglage lombaire (10) agencé à la face avant du support pour régler la position du soutien lombaire (32) perpendiculairement au plan d'extension de l'ossature de dossier, et
- le système de réglage lombaire (10) comprend au moins un élément de réglage (11' ; 11 ") qu'il s'agit d'amener en coopération d'action avec le soutien lombaire (32), et au moins un coulisseau (12' ; 12"), déplaçable par rapport à l'élément de réglage (11' ; 11 "), qui coopèrent de telle manière que lors du mouvement du coulisseau (12' ; 12"), l'élément de réglage (11' ; 11 ") est déplacé le long d'une direction avec une composante directionnelle perpendiculaire à la direction de déplacement du coulisseau (12' ; 12") et agit alors dans la direction en question sur le soutien lombaire,
**caractérisé en ce que**
il est prévu deux coulisseaux (12' 12 ; 12") qui sont d'une part précontraints dans des directions opposées (S' ; S") et sont respectivement déplaçables par rapport à un élément de réglage (11' ; 11 "), et qui sont d'autre part déplaçables dans des directions de traction opposées (Z' ; Z") par une force de traction transmise aux coulisseaux (12' ; 12") via un organe de traction (13, 13a, 13b).

2. Support selon la revendication 1, **caractérisé en ce que** les coulisseaux (12' ; 12") se déplacent en direction de tensionnement (S' ; S") quand la force de traction, transmise aux coulisseaux (12' ; 12") via l'organe de traction (13, 13a, 13b), est d'une amplitude inférieure à la précontrainte des coulisseaux (12' ; 12").

3. Support selon la revendication 1 ou 2, **caractérisé en ce que** les coulisseaux (12' ; 12") sont déplaçables dans les directions de traction (Z' ; Z") sous la force de traction transmise aux coulisseaux (12' ; 12") via l'organe de traction (13, 13a, 13b).

4. Support selon la revendication 3, **caractérisé en ce que** les coulisseaux (12' ; 12") se déplacent dans les directions de traction (Z' ; Z") quand la force de traction transmise aux coulisseaux (12' ; 12") via l'organe de traction (13, 13a, 13b) est d'une amplitude supérieure à la précontrainte des coulisseaux (12' ; 12").

5. Support selon l'une des revendications précédentes, **caractérisé en ce que** les directions de tensionnement (S' ; S") et les directions de traction (Z' ; Z") des coulisseaux (12' ; 12") sont mutuellement opposées.

6. Support selon la revendication 1, **caractérisé en ce que** les deux coulisseaux (12' ; 12") sont couplés l'un à l'autre via un élément de contrainte (14) qui engendre la précontrainte des coulisseaux (12' ; 12").

7. Support selon l'une des revendications précédentes, **caractérisé en ce que** la transmission d'une force de traction via l'organe de traction (13, 13a, 13b) a lieu via un actionneur manuel (1).

8. Support selon la revendication 7, **caractérisé en ce que** l'actionneur manuel (1) comprend un volant manuel (2).

9. Support selon l'une des revendications précédentes, **caractérisé par** un verrou (3a, 3b, 3c) qui, dans une position de verrouillage, empêche que les coulisseaux (12' ; 12") soient déplacés dans la direction de tensionnement (S' ; S") sous la précontrainte des coulisseaux (12' ; 12").

10. Support selon la revendication 9, **caractérisé en ce que** lorsque le verrou est libéré (3a, 3b, 3c) et sans transmettre une force de traction aux coulisseaux (12' ; 12") via l'organe de traction (13, 13a, 13b), les coulisseaux (12' ; 12") sont déplacés dans les directions de tensionnement (S' ; S") par la précontrainte.

11. Support selon l'une des revendications précédentes, **caractérisé en ce que** la précontrainte des coulisseaux (12' ; 12") est générée par un ressort (14) et/ou par un élément élastique.

12. Support selon l'une des revendications précédentes, **caractérisé en ce que** l'organe de traction (13, 13a, 13b) est réalisé sous forme de mécanisme de traction à câble.

13. Support selon l'une des revendications précédentes, **caractérisé en ce que** l'organe de traction (13, 13a, 13b) est réalisé comme mécanisme à câble Bowden (13), dont la gaine enveloppe (13a) s'appuie sur un élément de soutien (16), sur lequel agit également un élément de tensionnement (14) qui engendre la précontrainte des coulisseaux (12' ; 12").

14. Support selon la revendication 13, **caractérisé en ce que** l'un des deux coulisseaux (12") sert d'élément de soutien (16) sur lequel s'appuie la gaine enveloppe (13a) du mécanisme à câble Bowden (13) et sur lequel agit l'élément de précontrainte (14).

15. Support selon l'une des revendications précédentes, **caractérisé en ce que** les coulisseaux (12' ; 12") sont déplaçables sensiblement parallèlement au plan d'extension de l'ossature du dossier (30).

16. Support selon l'une des revendications précédentes, **caractérisé en ce que** les coulisseaux (12' ; 12") sont déplaçables sensiblement en ligne droite.

17. Support selon l'une des revendications précédentes, **caractérisé en ce qu'**au moins une butée (15) limite le déplacement des coulisseaux (12'; 12").

18. Support selon l'une des revendications précédentes, **caractérisé en ce que** les coulisseaux (12' ; 12") sont guidés au moyen d'un guidage de coulisseaux (17).
